# FASCICULE DE BREVET EUROPEEN

(11) **EP 3 347 128 B1**
(45) Date de publication et mention de la délivrance du brevet: **27.01.2021**
(21) Numéro de dépôt: 16760485.9
(22) Date de dépôt: 05.09.2016
(51) Int. Cl.: B01L 3/00, G02B 21/34

(54) **ENSEMBLE COMPORTANT UN SUBSTRAT DE SUPPORT D'ÉCHANTILLON LIQUIDE ET SON UTILISATION**
ANORDNUNG MIT TRÄGERSUBSTRAT FÜR FLÜSSIGKEITSPROBE UND VERWENDUNG DAVON
ASSEMBLY COMPRISING LIQUID SAMPLE SUPPORT SUBSTRATE AND USE THEREOF

(30) Priorité: 11.09.2015 FR 1501889
(43) Date de publication de la demande: 18.07.2018
(73) Titulaire: Elvesys, 75784 Paris (FR)
(72) Inventeur: LEBERRE, Maël, 75020 Paris (FR); PLECIS, Adrien, 92340 Bourg la reine (FR)
(74) Mandataire: Marconnet, Sébastien
(86) Numéro de dépôt international: PCT/EP2016/070805
(87) Numéro de publication internationale: WO 2017/042115

(56) Documents cités:
- WO-A1-82/02958
- JP-A- 2002 350 305
- US-A1- 2003 194 709
- US-A1- 2004 202 583
- US-A1- 2004 241 783
- US-A1- 2011 159 547
- US-A1- 2014 106 395

## Description

L'invention concerne un ensemble d'analyse optique d'un échantillon liquide comportant un substrat micro structuré de support d'échantillon liquide recouvert par une lamelle ainsi qu'une utilisation d'un tel ensemble pour la réalisation d'analyse d'échantillon liquide.

Dans de nombreux domaines de recherche et d'analyse, on cherche à déterminer la présence ou l'absence de certaines particules dites « particules d'intérêt » dans un liquide et/ou d'étudier le développement de ces particules d'intérêt présentes dans ce liquide et/ou de favoriser la formation de structures à partir des particules présentes dans le liquide. Ces particules peuvent être d'une part des objets biologiques tels que des cellules (animales et/ou végétales, vivantes et/ou non vivantes), des anticorps, des protéines, des virus, etc... et/ou d'autre part des objets non biologiques tels que des molécules dites d'intérêt, notamment des molécules chimiques en particulier des polymères, des liquides, etc....

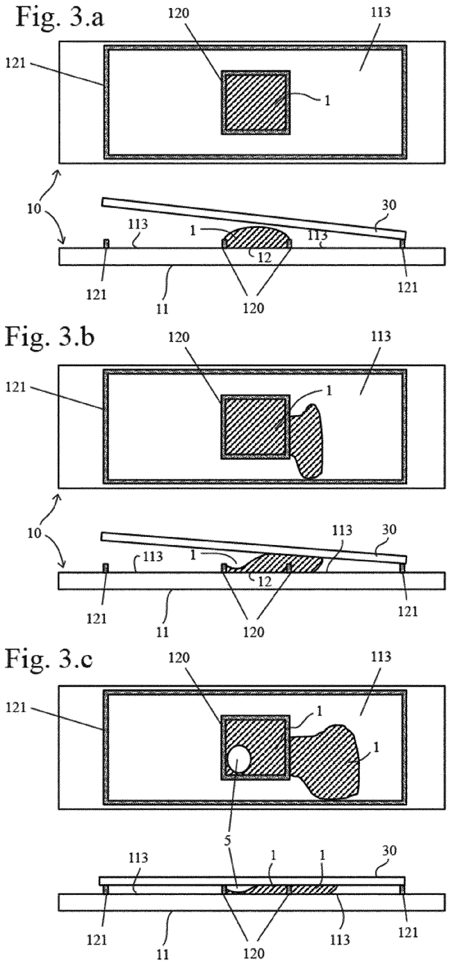

La plupart des protocoles mis en œuvre pour l'analyse et/ou l'étude d'un échantillon généralement constitué d'un liquide contenant (ou non) au moins une particule, utilisent un support d'échantillon qui est fréquemment constitué d'une lame de verre parallélépipédique et un instrument d'observation tel qu'un microscope, un analyseur de spectre, un système de quantification de la fluorescence, etc. L'échantillon est déposé sur la lame de verre, puis une lamelle de verre est déposée délicatement sur l'échantillon comme illustré sur les figures 3a à 3c du présent texte, afin de ne pas enfermer de bulle d'air entre la surface inférieure de la lamelle et l'échantillon ni d'endommager les particules éventuellement présentes dans l'échantillon, la lamelle étant alors maintenue par capillarité sur la lame de verre. Dans certaines applications, elle peut être fixée sur la lame de verre par collage, généralement à l'aide d'une cire, afin notamment d'enfermer l'échantillon et éviter l'évaporation de ce dernier qui pourrait se produire lors d'observations continues notamment de longue durée et/ou lorsque l'échantillon est soumis à des variations de température, notamment des élévations de température.

En limitant l'évaporation du liquide, la technique de collage permet d'une part d'éviter ou de limiter le mouvement du liquide dans la zone d'analyse de l'échantillon et d'autre part d'éviter une variation de concentration en particules et/ou sels éventuellement dissous dans l'échantillon, ce qui permet une observation des particules en conditions stabilisées.

Toutefois, l'utilisation de ce type de protocoles engendre de nombreuses difficultés pour l'utilisateur. Tout d'abord, lorsque l'on dépose le liquide sur la lame, la goutte peut s'étaler de façon non contrôlée sur l'ensemble de la surface en un film de quelques microns d'épaisseur. Outre la perte d'échantillon le long des bords de la lame, il devient alors difficile de contrôler l'extension latérale du liquide, par exemple relativement à une zone d'analyse imposée par l'instrument d'analyse.

D'autres phénomènes capillaires peuvent également venir perturber le positionnement de l'échantillon : lors de la dépose de la lamelle supérieure, il est courant que l'affinité du liquide pour l'un des deux substrats amène la goutte à rapidement migrer vers l'un des bords de la lame et de la lamelle. Ce phénomène est aussi à l'origine du gaspillage d'une partie de l'échantillon et rend le positionnement de l'échantillon au centre de la lamelle plus complexe. Ce dernier prend alors une extension latérale aléatoire, et présente donc une épaisseur difficilement contrôlable. Enfin, la présence de liquide au bord de la lamelle peut venir perturber l'étape de collage qui permet de rendre le système hermétique. Cette étape dépendant de la dextérité de l'utilisateur, le résultat du conditionnement de l'échantillon sous forme de cavité fine est très aléatoire et il peut en résulter une variabilité importante des résultats d'analyse. La présence de liquide en dehors de la lame et/ou la lamelle, qui peut ainsi être au contact de l'utilisateur et/ou de l'instrument d'analyse, est généralement considérée comme inacceptable particulièrement dans le cas d'échantillons renfermant des produits cancérigènes ou toxiques.

Finalement, l'étape de collage reste particulièrement longue à mettre en œuvre et requiert l'intervention d'un utilisateur expérimenté. Pour cette raison, cette étape n'est pas envisageable pour certaines applications qui nécessitent l'analyse d'un grand nombre d'échantillons. En outre, elle ne permet pas à l'utilisateur de récupérer son échantillon puisque ce type de collage n'est pas adapté à une ouverture réversible. Afin de tenter de remédier à certains de ces inconvénients, différentes solutions ont déjà été proposées :
US-A-2041290 décrit un support d'échantillon ayant la forme d'une plaquette pour l'analyse d'un échantillon liquide, par exemple une goutte de sang, sur la surface supérieure de laquelle sont prévues une pluralité de puits de forme circulaire, chaque puit étant entouré d'un canal prévu pour recueillir l'excédent de liquide de l'échantillon à analyser déposé dans ledit puit.

US-A-2302830 décrit une plaquette du même type dans laquelle le puit est formé en déposant un cordon circulaire de matériau à la surface de la plaquette, ce cordon étant entouré d'une rainure circulaire gravée à la surface de la plaquette afin de recueillir l'excédent de liquide à analyser.

US-A-5948685 propose d'utiliser un dispositif constitué d'une lame de verre pour microscope sur laquelle est structurée une barrière de contention dont l'épaisseur est inférieure à 1 µm, de manière à créer un puit sur la surface de la lame. L'échantillon étant placé à l'intérieur de ce puit, tout débordement est en principe arrêté, ce qui permet d'éviter les effets de perte de liquide au niveau des bords de la lamelle. On a toutefois constaté que si le volume de l'échantillon est mal contrôlé, c'est à dire trop élevé, cette barrière n'est pas suffisante pour empêcher les fuites au niveau des bords. En outre, si la lamelle que l'on vient poser sur l'échantillon présente une grande affinité avec l'échantillon liquide, ce qui est souvent le cas et si elle n'est pas déposée de façon rigoureusement parallèle à la lame, un phénomène de débordement du liquide a lieu le long de cette lamelle.

WO 82/02958 décrit une plaquette support pour l'analyse d'échantillons liquides, cette plaquette comportant une pluralité d'ensembles prévus pour le dépôt d'une goutte d'échantillon liquide, chaque ensemble étant constitué d'un puit central entouré d'un canal ou rainure capable de recevoir le liquide en excès déposé dans le puit central.

US2014/106395 décrit des plaques supports de gouttes suspendues utilisées pour la culture de cellules. Ces supports comportent une pluralité de puits entourés de rainures. Les rainures décrites dans ce document ont pour fonction de maintenir la goutte de liquide dans le puit lorsqu'on retourne cette plaque support pour réaliser cet ensemble de gouttes suspendues.

JP 2002350305 décrit une plaque avec un échantillon immergé dans un réactif, celui-ci étant stocké au niveau d'une rainure de stockage afin d'éviter le dessèchement de l'échantillon.

US-A-7138270 décrit notamment sur sa fig.8 un support d'échantillons liquides comportant une pluralité de puits circulaires régulièrement répartis sur la surface supérieure du support. La hauteur typique des parois latérales des puits est comprise entre 30 et 200 µm, l'ensemble de ces puits étant entouré par une barrière externe de confinement. Ce type de configuration permet de remplir les puits de façon complète à l'aide d'un excédent de liquide qui est chassé lors de la mise en place de la lamelle supérieure, dans la zone intermédiaire située entre les différents puits et délimitée d'une part par les parois latérales des différents puits et d'autre part par la barrière externe de confinement. Cette barrière externe permet de contenir le liquide excédentaire pour éviter toute fuite en dehors de la lame et de la lamelle. Dans ce type de système, le positionnement du liquide excédentaire n'est cependant pas maîtrisé et il faut déposer la lamelle de façon adaptée afin de limiter les contaminations croisées entre les puits. En effet, tant que la lamelle supérieure n'est pas hermétiquement scellée aux structures des puits, une partie du liquide excédentaire peut être drainée par capillarité hors d'un puit de façon incontrôlée. Cela a pour conséquence d'engendrer une bulle au sein d'un ou plusieurs puits (si la quantité de liquide drainée est trop importante) et la diffusion des particules d'un puit à l'autre lorsque les liquides d'échappement de deux puits consécutifs se mêlent, contaminant ainsi l'analyse ultérieure de puits initialement indépendants. En outre, la moindre poussière ou particule issue de l'échantillon venant s'intercaler entre la barrière et la lamelle supérieur ou la moindre irrégularité dans la barrière est à l'origine d'une zone d'évaporation privilégiée non maîtrisable qui limite la reproductibilité de l'analyse, particulièrement lorsque cette dernière est longue et nécessite d'être effectuée à des températures élevées. Cette configuration est donc peu fiable pour des analyses en routine même si elle est réalisée avec des technologies particulièrement reproductibles (et donc coûteuses).

Afin de limiter les problèmes d'évaporation et de fuites, il a été proposé dans WO2006052492 de déposer préalablement une couche de colle rugueuse sur la barrière de confinement. L'inconvénient de cette solution est l'impossibilité de récupérer l'échantillon, la perte de performance de ce type de dispositif en cas de poussière ou de défaut dans le processus de fabrication et surtout le risque de diffusion des composés de la colle dans l'échantillon à analyser qui serait alors contaminé.

US-A-2003/0194709 décrit un procédé de réalisation d'un substrat comportant des électrodes en matériau hydrophile entourées partiellement de zones hydrophobes afin de réaliser une analyse électrochimique d'un échantillon de type ADN. L'utilisation d'un tel substrat ne nécessite pas l'utilisation d'une lamelle de protection déposée sur l'échantillon liquide, cette lamelle n'étant utilisée que pour la réalisation d'analyses optiques d'un échantillon. Ainsi le problème lié à la présence d'une bulle d'air ne peut exister avec ce type de substrat qui s'utilise sans lamelle.

Aucun des systèmes précités ne permet donc de fournir une solution satisfaisante au problème de positionnement et de maintien d'un échantillon liquide dans une cavité fine, qui permette un positionnement latéral précis de l'échantillon, une excellente stabilité fluidique et chimique de l'échantillon dans la zone de mesure, ainsi qu'une absence de contamination croisée dans le cas du positionnement de plusieurs échantillons sur le support, indépendamment de la dextérité de l'utilisateur et de la précision du volume de l'échantillon.

Par ailleurs, lorsque les supports tels que décrits ci-dessus sont utilisés avec une lamelle (habituellement en verre transparent ou tout autre matériau similaire) qui vient s'appuyer sur l'échantillon liquide afin d'emprisonner celui-ci entre la cavité et la lamelle, de manière à obtenir un échantillon observable directement au-dessus de la lamelle, il est très fréquent de constater qu'une bulle gazeuse s'est formée dans le liquide au niveau de la cavité, sous la lamelle. La présence de cette bulle qui peut se déplacer dans toute la cavité rend l'observation de l'échantillon liquide difficile sinon impossible notamment lorsque la surface occupée par la bulle est importante par rapport à la surface de la cavité. Pour tenter d'éviter la formation de cette bulle due à un manque de liquide dans la cavité, l'expérimentateur a tendance à dispenser une quantité de liquide nettement supérieure au volume de la cavité. On a pu cependant constater que cela n'empêchait pas la formation de cette bulle lors de l'installation de la lamelle sur un support tel que décrit ci-dessus.

Le document US-A-2014/0106395 décrit des substrats pour la culture de cellules faisant appel au concept de gouttes suspendues initialement déposées dans des puits à la surface du substrat qui est ensuite retourné pour former une pluralité de gouttes tridimensionnelles suspendues. L'absence d'une lamelle déposée sur les gouttes ne permet pas d'utiliser ce support pour réaliser des analyses.

Le document WO82/02958 décrit un substrat comportant une cavité entourée d'une seule rainure et n'identifie pas l'existence possible d'une bulle ni ne suggère une quelconque solution pour éviter l'apparition de cette bulle.

Un objet de l'invention est constitué par un ensemble comportant un substrat du type micro structuré ne présentant pas les inconvénients des supports de l'art antérieur et permettant notamment d'éviter la formation d'une bulle dans l'échantillon liquide lors de la fermeture de la cavité du support avec une lamelle après avoir déposé l'échantillon dans la cavité.

L'ensemble d'analyse optique d'un échantillon liquide selon l'invention est caractérisé en ce qu'il comporte un substrat micro structuré de support d'échantillon liquide comprenant une face inférieure et une face supérieure qui comporte d'une part, au moins une cavité de surface de volume V0 débouchant sur ladite face supérieure et formant une zone d'analyse de l'échantillon liquide et d'autre part, une première rainure d'un premier volume V1, disposée autour de chaque cavité de surface et débouchant sur sa face supérieure ainsi qu'au moins une seconde rainure débouchant sur sa face supérieure et disposée autour de la première rainure, la somme des volumes des secondes rainures étant égale à V2, le volume V1+V2 étant supérieur ou égal à 0,05 V0, de préférence 0,1 V0, la profondeur des rainures étant supérieure à 10 microns et inférieure à 500 microns, de préférence comprise entre 20 microns et 500 microns, les rainures étant continues et/ou ne communiquant pas les unes avec les autres, substrat sur lequel est déposé dans au moins une cavité, au moins un échantillon liquide de volume supérieur à la somme des volumes de la cavité et de la première rainure, substrat qui est recouvert par une lamelle venant fermer l'ensemble des cavités du substrat.

Selon une première variante, le volume V1+V2 est supérieur ou égal à 0,2 V0, plus préférentiellement supérieur ou égal à 0,3 V0.

Selon une autre variante, le substrat selon l'invention est caractérisé en ce qu'il comporte au total n rainures, avec n>2, chaque rainure de rang p supérieur ou égal à 2 et inférieur ou égal à n étant disposée autour de la rainure de rang (p-1), le volume total V3 des (n-1) premières rainures étant supérieur ou égal à 0,05 V0.

Selon un mode préférentiel, le substrat selon l'invention comportera n rainures, n étant inférieur ou égal à 100, de préférence inférieur ou égal à 10.

Selon une première alternative, la section de chacune des rainures sera sensiblement identique et/ou de préférence constante ou sensiblement constante : le substrat comportera par exemple n rainures circulaires concentriques de même section, disposées de préférence à égale distance les unes des autres.

Selon une autre alternative, la section de l'une au moins des rainures, de préférence la nième ou dernière rainure (la plus extérieure) sera supérieure à celle des autres rainures, de préférence supérieure ou égale à 5 fois, plus préférentiellement 10 fois la section de la (n-1) ième rainure. L'intérêt supplémentaire d'une nième rainure d'un volume sensiblement supérieur ou très supérieur à celui de la (n-1) ième rainure, est de permettre d'éviter dans la grande majorité des cas, un débordement du liquide échantillon au delà de cette nième rainure, en particulier lorsqu'on dispose d'un support comportant une pluralité de cavités, chacune d'entre elles étant entourée par une pluralité de rainures, par exemple un même nombre n de rainures.

Selon un mode préféré de réalisation, le substrat selon l'invention possède au moins six, de préférence au moins huit cavités de surfaces, chaque cavité ayant un diamètre d'environ 5 mm et une profondeur comprise entre 20 micron et 500 microns et étant distante d'environ 5 mm d'une autre cavité, chaque cavité étant entourée d'une série de 5 à 10 rainures d'environ 100 microns de profondeur, distantes les unes des autres d'environ 100 microns.

On a constaté qu'il était important que les rainures soient continues et/ou qu'elles ne communiquent pas (fluidiquement) les unes avec les autres afin d'éviter tout écoulement par capillarité entre les rainures et par voie de conséquence la formation de bulles dans la cavité centrale.

D'une manière générale, on a en effet constaté que la présence d'au moins une seconde rainure continue (et/ou ne communiquant pas fluidiquement avec les autres rainures) disposée autour de la première rainure permettait d'assurer un écoulement régulièrement réparti (sur 360 degrés) du liquide depuis la cavité jusqu'à au moins la seconde rainure évitant ainsi « l'effet de coin » présent lors de la fermeture de la cavité avec une lamelle. En effet, nous avons pu constater que l'aspiration brutale par capillarité du liquide de l'échantillon dans une rainure pouvait provoquer dans certains cas une bulle dans la rainure plus intérieure. La présence d'au moins une seconde rainure évite que cette bulle apparaisse dans la cavité, ou zone d'observation de l'échantillon. Par ailleurs, en évitant un effet de succion brutal et donc incontrôlé du liquide, ce qui provoque un écoulement trop important de liquide, la présence de multiples rainures évite ainsi de trop vider la cavité et provoquer l'apparition d'une bulle d'air sous la lamelle.

De préférence la distance entre la première rainure et la seconde rainure sera sensiblement constante (par exemple dans le cas d'une première rainure circulaire, la seconde rainure sera de préférence également circulaire, les deux rainures étant concentriques). Ceci améliore encore les résultats obtenus.

De préférence également, ces rainures sans être nécessairement de section exactement constante sur leur ensemble, seront généralement de section sensiblement constante de manière à ne pas créer et/ou favoriser des passages privilégiés pour le liquide lors de l'écoulement de celui-ci de la cavité vers la première rainure et de la première rainure vers la seconde rainure, en favorisant la symétrie de l'ensemble cavité et rainures.

La forme de la cavité en particulier la forme du contour de la cavité lorsqu'elle débouche sur la surface supérieure du support, peut être quelconque mais sera de préférence de la forme d'une cuvette à parois de préférence sensiblement verticales ou inclinées vers l'intérieur de la cavité et dont le contour sera de préférence sensiblement symétrique par rapport à un axe perpendiculaire à la face supérieure du support (généralement plane). Le contour préférentiel sera circulaire, rectangulaire ou carré. De préférence au moins la première rainure sera de même forme que le contour de la cavité, positionnée sensiblement à égale distance de celui-ci.

Selon une autre variante, la surface située sur la face supérieure du substrat, entre le contour de la cavité et le contour intérieur de la première rainure sera de préférence une surface plane ou sensiblement plane, de préférence orientée parallèlement à la face inférieure du support, elle même généralement plane. Cette surface (ci-après dénommée première surface) pourra soit conserver ses propriétés de surface (par exemple hydrophile ou hydrophobe) inhérentes à la forme initialement choisie pour cette surface et/ou au matériau utilisé pour le substrat ou sa couche supérieure (-voir ci-après par exemple le cas du substrat dont la cavité et les barrières sont créées par dépôt sélectif d'une couche de matériau-), soit être spécialement traitée pour lui donner des propriétés de surface différentes de celles du matériau utilisé (par exemple, la rendre hydrophile si elle est hydrophobe ou vice-versa, ou bien diminuer et/ou augmenter son caractère hydrophile ou hydrophobe).

Les traitements à appliquer sur une surface pour modifier ses caractéristiques de surface vis à vis des différents liquides présents dans les échantillons à analyser (que ces traitements soient de nature physique et/ou chimique) sont d'une manière générale connus de l'homme du métier.

Bien entendu et selon encore une autre variante de l'invention, on peut être amené également à modifier l'état de surface de l'une et/ou de plusieurs des parois et/ou portions de parois de l'une ou plusieurs des rainures de manière similaire à celle décrite ci dessus concernant les surfaces entre les rainures (y compris la cavité centrale) afin de modifier si cela est souhaitable, l'état de surface d'une partie au moins desdites surfaces. Il est également possible de modifier la forme de toute surface ou portion de surface du substrat destinée notamment à être au contact de l'échantillon liquide afin de modifier ses propriétés capillaires, en particulier l'angle de contact du liquide avec ladite surface. Il est également possible selon une autre variante de l'invention, de modifier la forme des parois des rainures et de la cavité centrale , notamment au niveau des arêtes présentes à l'intersection de la face supérieure du substrat et des parois latérales des rainures ou de la cavité centrale de manière à créer des barrières capillaires additionnelles, dont l'effet viendra s'ajouter (en plus ou en moins) à l'effet barrière capillaire inhérent à la forme initiale de la surface et/ou du matériau dont est fait cette surface, vis à vis du liquide de l'échantillon. Dans toute la présente description, on appellera ainsi « barrière capillaire » toute déformation de la surface ou d'une portion de surface du substrat qui est destinée lors de l'utilisation de celui-ci à être au contact du liquide d'un échantillon, que cette déformation résulte d'un traitement de la surface et/ou d'une modification de la forme de la surface, notamment l'apparition de formes convexes sur celle-ci.

Ainsi selon une variante de l'invention, le support est caractérisé en ce que au moins certaines zones de la face supérieure et/ou de la cavité et/ou des rainures sont traitées de manière à modifier dans ces zones les propriétés de la barrière capillaire inhérente à l'état de surface du matériau support et/ou à la géométrie des rainures et des surfaces.

La section des rainures peut être quelconque mais sera selon différentes variantes préférentielles de préférence rectangulaire, carré, trapézoïdale, triangulaire, etc.

On pourra notamment choisir la forme de la section d'une rainure en fonction de la valeur de l'angle (convexe) que font la paroi latérale de la rainure et la surface de la face supérieure au niveau du substrat (valeur de l'angle convexe de l'arête) de manière à modifier la barrière capillaire créée par cette surface convexe qui relie les rainures (ou la cavité) à la face supérieure du substrat.

La zone de convexité au niveau de chaque barrière capillaire et notamment chaque arête se caractérise par un angle de convexité Alpha c défini comme étant l'angle entre la direction locale de la surface après la zone de convexité (par exemple la paroi latérale d'une rainure) et la direction globale de la surface (par exemple la direction de la face supérieure du substrat). On a ainsi constaté selon une autre variante de l'invention que la barrière capillaire ainsi créée était particulièrement efficace si Alpha c était tel que :
Alpha c> 140°-(Alpha m support + Alpha m surface) et de préférence,
Alpha c> 180°-(Alpha m support + Alpha m surface)

- Alpha m support désignant l'angle de mouillage du liquide échantillon sur la surface de la lamelle que l'on vient déposer sur l'échantillon liquide disposé dans la cavité de surface du support selon l'invention (encore appelé lame).
- Alpha m surface désignant l'angle de mouillage du liquide échantillon sur la surface convexe contenant la barrière capillaire.

Une telle barrière capillaire peut prendre par exemple l'une des formes suivantes :
- Une rainure gravée dans le verre par lithographie a l'acide fluorhydrique ayant des flancs verticaux (donc formant une zone convexe au niveau de son arrête intérieure ayant un angle de convexité de 90°), puis traiter avec un traitement de surface hydrophobe rendant l'angle de mouillage de l'eau sur le verre >70° de manière à ce que l'angle de la surface sur le flan intérieur de la rainure. Dans ce cas, la surface support peut être une lamelle de verre propre (angle de mouillage d'environ 20° pour l'eau pure et verre propre).
- une structure en résine de type époxy « novolac » commercialisée sous la dénomination « SU8 » en forme de mur défini par photolithographie sur une lamelle de verre, et ayant des flancs verticaux. Ce type de surface peut également former une barrière capillaire avec une lamelle de verre propre (la résine SU8 à un angle de mouillage d'environ 70°).
- Une vallée arrondie moulée dans une polyoléfine telle que du polyéthylène dont le flanc intérieur forme un angle (Alpha c) de 70° avec la surface (donc facile à mouler ou à former par embossage, par exemple). Ce type de surface peut également former une barrière capillaire avec une lamelle de verre propre (le PE à un angle de mouillage de 96°).
- Des rainures gravées par micro-usinage dans une surface de polytétrafluoroéthylene (PTFE) ou ses dérivés ou composés fluorés voisins ayant des propriétés similaires, avec des flancs ayant un angle de convexité de 135°. Ce type de surface pourra former une barrière capillaire pour n'importe quelle surface avec l'eau, mais aussi pour de nombreux autres liquides.
- Avantageusement, la zone convexe peut contenir une arête qui définit l'angle de convexité de manière précise et bien localisée.
- Avantageusement, la surface après la zone convexe peut être localement plus hydrophobe (moins mouillante) pour augmenter l'efficacité de la barrière capillaire tout en conservant une liberté sur le choix de la nature de la surface du reste de la surface, notamment de la cavité de l'échantillon (Les traitements de surface pour promouvoir l'adhésion des cellules adhérentes, par exemple, sont souvent hydrophiles, il peut donc être nécessaire de garder une surface hydrophile pour cette zone-là).

D'une manière générale, le matériau du support peut être non seulement du verre habituellement utilisé pour ces plaques d'analyse mais peut également être constitué par tout matériau thermoplastique, thermodurcissable, transparent ou non, ainsi que des matériaux céramiques, ou autres.

Les dimensions des rainures pourront être très variées selon l'usage prévu du support. La largeur et la profondeur des rainures pourront varier entre 10 microns et 500 microns, de préférence entre 20 microns et 500 microns.

De préférence, la distance entre le contour intérieur d'une rainure avec le contour extérieur de la rainure précédente qu'elle entoure et/ou la cavité est comprise entre environ 1 micron et 1 mm, de préférence égale à environ 100 microns.

Selon une première variante, le substrat est constitué par un matériau monocouche ou multicouches dans lequel sont gravés ou formés thermiquement, mécaniquement et/ou chimiquement l'une au moins des rainures et/ou la cavité.

Selon une seconde variante, le substrat est composé d'au moins une première couche inférieure sur laquelle est déposée une seconde couche supérieure à partir de laquelle sont réalisées les parois latérales de la cavité et/ou des rainures dont les parois latérales sont ainsi disposées en saillie par rapport à la couche inférieure. Selon cette variante, les rainures peuvent être réalisées par dépôt sélectif d'au moins une résine ou par dépôt sous vide de type PVD, CVD, PECVD, etc.

Le traitement local de certaines portions de rainures et/ou de cavité ou de la surface du substrat pour rendre ces portions plus ou moins hydrophiles ou hydrophobes peut être réalisé par tout moyen bien connu de l'homme de métier.

La fabrication des rainures et/ou de la cavité ne pose pas de problème particulier: il suffit d'utiliser les méthodes de formage bien connues et identifiées pour le matériau utilisé : formage mécanique, thermomécanique, gravure chimique (gravure sélective à l'aide d'une technique de masquage), gravure à l'aide d'un laser, ainsi que toutes les techniques de dépôt sélectif de matériaux sur un support lorsqu'on crée la cavité et/ou les rainures par une technique de dépôt (enduction par exemple au travers d'un écran de soie, dépôt chimique, dépôt sous vide du type CVD, PVD, etc.).

Bien entendu lorsque la cavité et/ou les rainures sont créées par dépôt d'un matériau sur un support, la cavité et/ou les rainures ne sont pas créées par suppression de matière sur et à partir de la surface supérieure du support mais par apport d'un matériau identique ou différent de celui constituant le support pour créer des barrières physiques qui délimitent la cavité et/ou les rainures périphériques. Par soucis de simplification on utilisera les termes de cavité et de rainures pour désigner respectivement le volume emprisonné à l'intérieur de la première barrière physique (qui est donc continue dans cette variante) et les volumes emprisonnés entre les autres barrières disposées autour de la première barrière et donc autour de la cavité centrale (cette variante est illustrée notamment sur les figures ci-après)

On a généralement constaté, qu'avec le support micro structuré selon l'invention, la zone d'étalement 3 de l'échantillon liquide 1 respecte l'enveloppe délimitée par les rainures, permettant ainsi de centrer l'échantillon dans une zone d'analyse choisie et non aléatoire et limitant aussi le risque de perte d'échantillon par fuite.

Parmi les structures préférées du support selon l'invention, figurent les structures comportant deux ou trois rainures disposées autour de la cavité centrale, ces rainures étant de préférence semblables c'est à dire ayant de préférence la même section droite, ainsi que les structures dans lesquelles la dernière rainure a une section supérieure à celle des autres rainures.

Pour pouvoir réaliser avec le substrat selon l'invention une bonne analyse optique de l'échantillon comme cela est expliqué dans la présente demande, il est en effet important d'éviter la formation d'une bulle d'air dans l'échantillon liquide: pour cela, il faut notamment que de préférence le volume de l'échantillon liquide dispensé dans la cavité soit légèrement supérieur au volume de la cavité sans cependant déborder de cette cavité grâce au ménisque de liquide qui se forme au sommet de la cavité. Pour cela il est nécessaire que le manipulateur soit bien entrainé ou bien il sera nécessaire de disposer d'un système automatisé de délivrance d'un volume calibré, systèmes disponibles dans le commerce tels que les pipettes automatiques. En règle générale, on considère qu'il est préférable que le volume des rainures soit tel qu'il permette de contenir le volume excédentaire de liquide déposé dans la cavité centrale lorsqu'une lamelle est disposée sur le substrat.

Selon une variante, l'une au moins des intersections entre les surfaces latérales des rainures 13, 14, 15, 16 et/ou les cavités 12 et la surface supérieure 17 du substrat 10 est une surface ou portion de surface de forme convexe dont l'angle de convexité Alpha c défini comme étant l'angle entre la direction locale des surfaces latérales des rainures 13, 14, 15, 16 et/ou les cavités 12 et la direction de la surface supérieure 17 du substrat étant tel que :
Alpha c > 140°-(Alpha m support + Alpha m surface),
de préférence,
Alpha c > 180°-(Alpha m support + Alpha m surface)
   - Alpha m support désignant l'angle de mouillage du liquide échantillon 1 sur la surface de la lamelle 30 que l'on vient déposer sur l'échantillon liquide 1 disposé dans la cavité 12 de surface du support 10,
   - Alpha m surface désignant l'angle de mouillage du liquide échantillon 1 sur la surface ou portion de surface de forme convexe qui relie les rainures ou cavités à la surface supérieure 17 du substrat 10.

D'une manière générale, les rainures seront continues et séparées les unes des autres. Bien que l'on puisse faire communiquer deux ou plusieurs puits et/ou rainures entre eux et notamment plusieurs puits entre eux et prévoir un ensemble de rainures qui entourent la pluralité de puits (comme par exemple représenté sur la fig.6 de la présente demande ou les rainures sont communes à plusieurs cavités), il sera préférable de ne pas prévoir de communication liquide entre les différentes rainures, entre elles et/ou avec au moins une cavité.

Le substrat défini ci-avant ainsi que l'ensemble d'analyse trouvent leur utilisation notamment pour la réalisation d'analyse d'un échantillon liquide et notamment en utilisant la technique d'amplification dite « PCR » (ou « Polymerase Chain Reaction »).

L'invention sera mieux comprise à l'aide des exemples de réalisation suivants donnés à titre non-limitatif conjointement avec les figures qui représentent :
- la figure 1, une vue schématique d'un système constitué du substrat micro structuré selon l'invention recouvert d'une plaquette lors d'une analyse de type observation microscopique.
- les figures 2a à 2d, des vues schématiques des étapes de remplissage de la zone micro-structurée du substrat selon l'invention.
- les figures 3a à 3c, des vues schématiques des étapes de remplissage d'un substrat de l'art antérieur.
- la figure 4, des exemples schématiques de réseaux d'échappement (rainures) de sections triangulaires et trapézoïdales.
- la figure 5, une vue schématique d'un exemple de substrat selon l'invention destiné à une analyse multi-échantillons.

Sur l'ensemble des figures, les mêmes éléments portent les mêmes références.

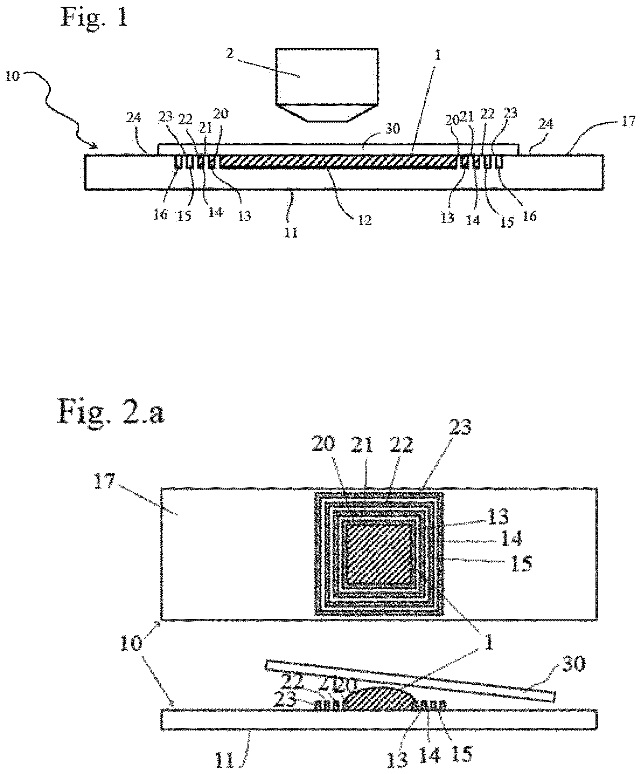

La figure 1 présente une vue schématique en coupe d'un exemple de réalisation du support selon l'invention en utilisation finale sur laquelle est représentée une vue schématique en coupe de l'ensemble selon l'invention constitué d'un substrat micro structuré 10 composé d'un matériau d'épaisseur comportant une face inférieure 11 et une face supérieure 17 sur laquelle débouche un réseau de cavités de surface. Ce réseau de cavités de surface est composé d'une première cavité de surface 12 dite « zone d'analyse » destinée à recevoir l'échantillon liquide 1 à analyser, au dessus duquel est placé selon le présent exemple un système de microscopie classique par l'intermédiaire d'un objectif de microscope 2. Le réseau de cavités de surface comporte en outre une pluralité de rainures 13, 14, 15, 16 formant une zone dite « zone d'échappement » destinée à recueillir l'excédent d'échantillon 1 déposé initialement par l'utilisateur dans la zone d'analyse et/ou lors de la pose de la plaquette transparente 30 sur le support au niveau de la zone d'analyse. La zone d'échappement est constituée d'un ensemble de rainures disposées de préférence de façon concentriques lorsque la cavité centrale 12 possède un centre de symétrie.

Les rainures, ci-après nommées également « couloirs d'échappement » sont dans cet exemple au nombre de quatre et telles que la rainure 16 entoure la rainure 15 qui entoure la rainure 14 qui entoure la rainure 13 qui elle même entoure la cavité centrale 12 ou zone d'analyse. Le couloir d'échappement 13 constitue le couloir d'échappement ci-après nommé « primaire », c'est-à-dire entourant uniquement la cavité ou zone d'analyse 12. (les autres couloirs d'échappement 14, 15, 16 sont ci- après nommés « secondaires », c'est-à-dire entourant la zone d'analyse 12 et le couloir d'échappement primaire 13). Sur cette figure la section des rainures est sensiblement identique. L'ensemble cavité et rainures est dans cet exemple surmonté d'une plaquette de fermeture 30 composée d'une lamelle de microscope de 150 µm d'épaisseur, formant ainsi un ensemble de cavités non connexes. L'ensemble des cavités et rainures comporte des surfaces de séparation 20, 21, 22, 23 (se prolongeant par une surface 24) semblables ou différentes.

Un procédé, par exemple, pour réaliser un substrat microstructuré selon cette figure consiste à choisir pour le matériau d'épaisseur une lamelle de microscope, par exemple de dimensions 26 mmx76 mm en matière plastique telle que du polystyrène, à appliquer une pression à l'aide d'une pièce métallique parallélépipédique, sur l'une des surfaces de la lamelle qui sera de fait la surface supérieure 17 du substrat micro structuré, la surface inférieure 11 étant supportée par une pièce métallique plane recouvrant de préférence l'intégralité du substrat. En chauffant les deux pièces métalliques à une température proche de la température de transition vitreuse (95°C) du matériau choisi et en appliquant une pression sur le parallélépipède métallique supérieure à 1 bar, ce dernier s'enfoncera dans la lamelle de polystyrène de quelques dizaines de microns fonction du temps et de la pression exercée. Après refroidissement de la structure et désolidarisation des parties métalliques et de la lamelle, on obtient une cavité de surface de forme rectangulaire sur la surface supérieure de la lamelle constituant la zone d'analyse 12. Ce procédé de fabrication est généralement assimilé à un procédé de thermoformage et il est compatible avec la plupart des matières plastiques et des matériaux amorphes (comme le verre, les résines thermoplastiques, etc). Afin de réaliser les rainures concentriques 13, 14, 15, 16 de la zone d'échappement, on peut par exemple, répéter l'opération avec quatre pièces métalliques de sections rectangulaires croissantes positionnées de façon à former des rainures concentriques. Pour plus de détails on peut par exemple se reporter au document J.L. Throne, Understanding Thermoforming, Hanser Gardner Publications, Inc., Cincinnati OH, 1999.

La structure emboîtée des rainures permet de contrôler la zone d'étalement de l'échantillon liquide 1 entre le substrat micro structuré.

Bien entendu on peut réaliser la même structure selon l'invention en déposant les barrières de contention 20, 21, 22 et 23 sur un support et créer ainsi un relief.

Les surfaces convexes constituées par les arêtes délimitant les rainures 13, 14, 15, 16 forment des barrières capillaires dont les propriétés sont inhérentes à la géométrie et/ou aux matériaux et traitements de surface utilisés pour réaliser le support. Selon l'invention, on peut modifier les propriétés de ces barrières capillaires en modifiant la géométrie des rainures, et notamment de leurs arêtes et/ou en les traitant localement (partiellement ou totalement) et/ou les surfaces qui les entourent, comme cela a été expliqué ci-avant.

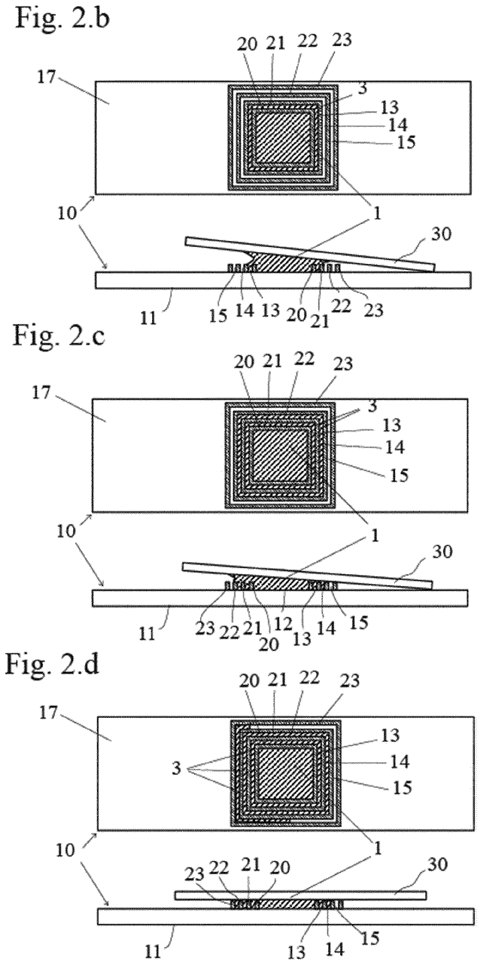

Les figures 2a à 2d illustrent de façon schématique les étapes de remplissage du réseau de cavités/rainures de surface lors de l'utilisation standard par un expérimentateur, par exemple en biologie. Cet exemple illustre aussi un autre mode de réalisation d'un substrat micro structuré selon l'invention, dans lequel le réseau de micro cavités de surface est réalisé par un procédé photo lithographique tel que décrit par exemple dans le livre de Sami Franssila « Introduction to Microfabrication », Wiley dans une couche de matériau micro structuré recouvrant un matériau d'épaisseur plan. Ce procédé de fabrication présente l'avantage, comparativement à la technique de thermoformage précédemment décrite, de permettre de combiner différents matériaux au contact de l'échantillon liquide 1.

Sur la Figure 2a, la première étape de remplissage de la cavité fine d'analyse est représentée : elle correspond au dépôt de l'échantillon liquide 1 sur le substrat micro structuré. L'utilisateur à l'aide, par exemple, d'une micropipette dépose un volume d'échantillon liquide 1 supérieur à la somme des volumes de la zone d'analyse 12 et du couloir d'échappement primaire 13. En fonction de l'affinité du liquide pour le matériau constituant la couche de matériau micro structuré, l'extension latérale de l'échantillon liquide est alors soit limitée par l'enveloppe extérieure de la zone d'analyse (barrière capillaire négative ou affinité faible), soit par l'enveloppe intérieure de la cavité formant le couloir d'échappement primaire 13 ou première rainure (barrière capillaire positive ou affinité forte).

Pour bénéficier de cet effet de contention, nommé ci-avant barrière capillaire, le volume de liquide délivré par l'utilisateur doit rester inférieur à un volume critique qui dépend de l'affinité de l'échantillon liquide avec la couche de matériau micro structuré. Dans le cas d'un échantillon liquide 1 aqueux, l'utilisation d'un matériau hydrophobe tel qu'une résine de type époxy telle que la résine SU-8 (décrite ainsi que sa mise en œuvre dans le brevet US 4882245) permet d'améliorer la force de rétention de l'échantillon liquide lors de l'étape de distribution du liquide et donc le volume maximal délivré. Dans ce cas d'utilisation d'une résine hydrophobe de ce type qui après élimination des zones insolées (la cavité centrale et les rainures) à l'aide d'une source UV de longueur d'onde appropriée permet de conserver les zones protégées durant l'étape d'insolation UV, on crée ainsi des barrières capillaires négatives entre le contour extérieur de la cavité et le contour intérieur de la première rainure, entre le contour extérieur de la première rainure et le contour intérieur de la seconde rainure, etc..., ces barrières capillaires négatives toutes de même nature dans cet exemple, étant les surfaces de séparation 20, 21, 22, 23, 24, et les surfaces convexes des arêtes des rainures qui s'y rattachent.

L'utilisateur referme ensuite l'ensemble constitué du substrat micro structuré, de l'échantillon liquide 1 et d'une lamelle constituant le substrat de fermeture 30 afin de finaliser la mise sous forme d'un ensemble d'analyse comprenant le substrat 10, le liquide 1 à analyser et la lamelle 30 de fermeture. L'évolution de l'échantillon liquide 1 au sein de la structure de maintien est représentée successivement par les figures 2b, 2c et 2d sur lesquelles l'abaissement progressif de la lamelle 30 permet de faire s'écouler le liquide 1 au moins dans les rainures 13 et 14 en évitant la formation d'une bulle dans l'échantillon lorsque l'ensemble est fermé.

Pour un rapprochement critique du substrat de fermeture 30 et du substrat micro structuré 10, le volume excédentaire d'échantillon liquide devient trop important pour rester au dessus de la zone d'analyse 12. La pression exercée sur le liquide par le substrat de fermeture 30 pousse alors l'échantillon liquide 1 à franchir la barrière capillaire liée à la surface 20 et remplit la rainure 13, ce qui réduit brutalement la quantité d'échantillon liquide excédentaire. La zone d'étalement de l'échantillon recouvre alors la zone d'analyse et le couloir d'échappement primaire 13, le liquide étant temporairement stoppé par la nouvelle barrière capillaire 21 entre les couloirs primaire 13 et secondaire 14.

Lorsque le substrat de fermeture est à nouveau rapproché (figure 2c), la compression du volume excédentaire atteint à nouveau un point de basculement qui permet le remplissage de la seconde rainure 14 (ou premier couloir d'échappement secondaire). Le remplissage successif des couloirs d'échappement secondaires emboîtés aboutit finalement à la constitution d'une cavité fine telle que décrite sur la figure 2d où sur cet exemple, le dernier couloir d'échappement 15 (troisième rainure) n'est à priori que partiellement rempli, en fonction du reliquat de volume excédentaire restant juste avant la fermeture complète de la cavité 12. Dans certains cas, le remplissage brusque de la dernière rainure 15 à se remplir peut provoquer l'apparition d'une bulle dans la rainure précédente 14. C'est pour cette raison qu'il est important qu'il y ait au moins deux rainures autour de la zone d'échantillon pour éviter l'apparition de bulle dans la cavité centrale 1. Sur ces figures 2a à 2d, on a pris pour exemple un substrat avec trois rainures 13, 14 et 15, de sections sensiblement identiques.

On décrit ci-après des exemples de réalisation de l'invention.

### EXEMPLE 1 :

Dans cet exemple, le substrat de maintien 10 est constitué d'une lame de microscope en verre de silice sur laquelle a été déposée une couche micro structurée de résine photo sensible SU8 de 50 µm d'épaisseur définissant une zone d'analyse (cavité) 12 de volume total sensiblement égal à 5 µL sur une surface circulaire de 1 cm² et entourée d'une série de deux rainures, la première rainure ayant une section rectangulaire de 50 µm de profondeur et de 200 µm de largeur soit un volume de 0,4 µL, (c'est à dire 0,08 fois le volume de la cavité), la seconde rainure ayant une profondeur de 50 µm et une largeur de 5 mm, soit un volume de 15 µL, les deux rainures et la cavité étant respectivement séparées les unes des autres d'une distance de 200 µm. On constate que d'une manière générale, la répétition des rainures conformément à l'invention permet d'éviter l'apparition d'une bulle dans la zone d'analyse aussi bien pour les faibles volumes de liquide (5 µL) que pour les volumes plus importants (jusqu'à 20 µL dans cet exemple). L'angle de contact de la goutte délivrée dans la zone d'analyse est supérieur à 70° ce qui caractérise un matériau hydrophobe (la résine SU-8). Cet exemple de substrat selon l'invention permet le positionnement précis et le maintien d'une zone d'analyse sous forme de cavité, sans bulle, empêchant tout débordement de l'échantillon liquide en dehors de la cavité de la zone micro structurée. Ce type de substrat permet de contrôler l'épaisseur de la cavité d'analyse en contrôlant la hauteur de la couche structurée.

Dans cet exemple, alors que le matériau hydrophobe constituant la couche structurée permet de contenir un volume excédentaire plus important que dans le cas d'une couche structurée hydrophile, l'utilisation d'un matériau d'épaisseur hydrophile (un verre de silice) permet en revanche d'améliorer la rapidité de remplissage des rainures successives et donc minimise la probabilité de formation de bulles dans les rainures lors d'une fermeture trop rapide de la part de l'utilisateur. Le remplissage de plusieurs rainures est notamment recommandé pour limiter les problèmes d'évaporation de l'échantillon liquide dans la zone d'analyse.

En effet, la succession des rainures remplies par le liquide excédentaire constitue une barrière à l'évaporation d'autant plus efficace que le nombre de cavités et le remplissage des cavités est grand. C'est un autre avantage de l'invention que d'utiliser une pluralité de rainures qui permettent d'obtenir une barrière liquide entourant la zone d'analyse et donc d'empêcher, tant que cette barrière liquide est intacte une évaporation dans la zone d'analyse à l'origine d'instabilités fluidiques ou chimiques.

### EXEMPLE 2 :

On a utilisé le support de l'exemple 1 pour réaliser un exemple d'expériences montrant que la zone d'étalement de l'échantillon liquide 1 sur un substrat selon l'invention est stable : l'ensemble support plus échantillon liquide emprisonné par la lamelle 30 a été soumis à un échauffement à 50°C pendant 30 minutes : on ne constate aucune évaporation significative de l'échantillon liquide situé dans la zone d'analyse. Celui-ci n'a pas été affecté par le processus d'évaporation. En comparaison, un système lame - lamelle sans microstructures voit la même quantité d'échantillon liquide complètement évaporée après seulement 20 min.

La succession des rainures constituent donc une barrière à l'évaporation et permet de maintenir la zone d'analyse intacte.

Sans vouloir être liés par une quelconque théorie, les inventeurs pensent que cet effet peut être attribué à la succession des poches d'évaporations. En effet, chaque rainure, même vide, constitue une zone tampon où le taux d'humidité peut augmenter jusqu'à saturation. Dans le cas d'une simple barrière de contention, l'évaporation est d'autant plus rapide dans la zone d'analyse que le processus s'effectue par contact avec l'air extérieur directement. Le moindre défaut dans la barrière de contention ou la moindre poussière à ce niveau augmente aussi de façon dramatique l'évaporation de l'échantillon liquide. Dans un système selon l'invention, la multiplication des cavités intermédiaires entre la zone d'analyse et l'extérieur ralentit le processus d'évaporation. Lorsque l'on souhaite bénéficier de cet avantage lié au ralentissement de l'évaporation du liquide, on utilisera de préférence un support muni d'une pluralité de rainures avec n supérieur ou égal à 3.

### EXEMPLE 3 :

Cet exemple décrit la réalisation d'un substrat micro structuré selon l'invention comportant plusieurs cavités de surface, chaque cavité étant entourée d'une pluralité de rainures (il n'y a pas nécessairement bien que préférentiellement, le même nombre de rainures autour de chaque cavité). Sur une lamelle de format habituel (2,54 cm X 5,08 cm) par exemple en matériau synthétique de type PS ou PMMA, on réalise par moulage ou estampage deux rangées parallèles de quatre puits circulaires (cavités) de 5 mm de diamètre et de 25 microns de profondeur (soit un volume V0 de 0,5 microlitre). Chaque puits est distant du puits précédent dans la rangée de 5 mm (distance entre les périmètres des cavités). Chaque puits est entouré par une série de 5 à 10 rainures de 100 microns de profondeur distantes entre elles de 100 microns. Une série de 5 rainures correspond ainsi à un volume de 0,22 V0 et une série de 10 rainures correspond à un volume de 0,48 V0.

Ce type de substrat permet de déposer de très petits échantillons de manière fiable, sans présence de bulle après recouvrement avec la plaquette supérieure, sans risque de contact entre les échantillons et limitant l'évaporation qui peut être rapide pour ces petits volumes. Ce substrat permet notamment l'observation simultanée de plusieurs échantillons contenant des cellules animales ou des micro-organismes de type levure, qui ont des dimensions comprises entre 2 et 20 microns.

Les figures 3a à 3c illustrent un exemple du processus de remplissage de la cavité à l'aide d'un échantillon liquide selon l'art antérieur. On utilise une double barrière de contention 120, 121 pour la distribution du liquide de l'échantillon 1 et pour les éventuelles fuites d'échantillon. L'espace 113 entre les 2 barrières de contention peut être assimilé à une rainure ou couloir d'échappement primaire. L'utilisateur dépose un volume de liquide supérieur au volume limité par la barrière de contention 120 : le volume distribué étant supérieur au volume de la zone d'analyse, lors de la fermeture (Figure 3b), la barrière capillaire créée par la barrière de contention 120 est dépassée par l'échantillon liquide 1.Par capillarité, sous l'influence de l'angle entre le substrat supérieur et le substrat inférieur, une quantité non contrôlée de l'échantillon liquide est absorbée dans l'espace 113. « L'effet de coin » entre le substrat de fermeture 30 et le substrat micro structuré amène la zone d'analyse à se vider d'une partie importante du liquide de l'échantillon. Lors de la fermeture définitive de la cavité fine (fig. 3c), la zone d'analyse présente alors une bulle 5 du fait de l'échappement incontrôlé du liquide excédentaire. Si l'utilisateur dispense un volume supérieur au volume total de la zone d'analyse et du couloir d'échappement primaire, le liquide est alors amené à dépasser la barrière de contention 121: outre les problèmes de fuite en dehors du dispositif qui représente un risque pour l'utilisateur et/ou pour l'instrument dans le cas d'échantillons corrosifs ou cancérigènes, l'échappement incontrôlé de liquide hors du dispositif est à l'origine de bulles dans le dispositif et donc dans la zone d'analyse. De manière générale, on a pu observer que l'aspiration de l'échantillon liquide dans une rainure ou « effet de coin » pouvait souvent provoquer l'apparition d'une bulle dans la rainure plus intérieure si bien qu'il faut au moins 2 rainures ne communiquant pas l'une avec l'autre pour prévenir l'apparition d'une bulle dans la cavité centrale, ou zone d'observation de l'échantillon, une bulle pouvant apparaitre dans cette zone si il n'y a qu'une seule rainure. Dans le cas de l'invention (fig.1 et fig.2a à 2d), il est cependant important de noter qu'il est de préférence nécessaire que le couloir primaire (la première rainure) soit entièrement rempli avant l'étape d'échappement vers les couloirs secondaires (seconde rainure et rainures ultérieures) pour bénéficier du meilleur effet de protection par la seconde rainure. Lors du positionnement de la lamelle de fermeture, il est préférable d'éviter un mouvement trop rapide ou un mouvement de glissement du substrat 30 parallèlement au substrat micro structuré, car cela pourrait amener le liquide à franchir la surface 21 entre le couloir d'échappement primaire 13 et le couloir d'échappement secondaire 14 avant la constitution de la barrière capillaire négative sur la surface 20 autour de la zone d'analyse 12. Dans ce cas, une bulle pourrait s'introduire de façon non contrôlée dans la zone d'analyse.

Pour éliminer cet inconvénient, différentes variantes sont possibles : la première solution consiste à diminuer le volume de la première rainure. Plus ce volume est faible, plus le temps pour la remplir est faible et moins la dextérité de l'utilisateur n'entre en jeu dans la constitution de la barrière capillaire. En particulier, lorsque le volume du couloir primaire 13 est au moins 3 fois, de préférence au moins 5 fois et plus préférentiellement au moins 10 fois inférieur au volume V0 de la cavité 12, le temps de remplissage de la première rainure 13 devient négligeable devant l'action de l'utilisateur.

La deuxième solution consiste à utiliser une distribution de volumes pour les différentes cavités et rainures qui assurent que la zone d'analyse ne puisse pas se vider même en l'absence de barrière négative complète. Ainsi, si le volume du couloir d'échappement primaire est plus faible que le volume de la zone d'analyse et que le volume du couloir d'échappement secondaire adjacent, on s'assure que (i) soit le liquide préfère les cavités de faible volume (affinité forte du liquide pour la surface du substrat) et dans ce cas le couloir primaire sera préférablement rempli au couloir secondaire, (ii) soit que le liquide préfère les cavités de fort volume (affinité forte du liquide pour la surface du substrat) et dans ce cas le couloir primaire sera préférentiellement vidé par rapport à la zone d'analyse.

La troisième solution consiste à accélérer le remplissage de la première rainure en jouant sur les matériaux à l'intérieur des cavités et rainures. Dans les exemples des figures 2a à 2d, le verre utilisé pour le fond de la cavité est hydrophile ce qui a pour conséquence d'attirer le liquide plus rapidement dans le canal d'échappement primaire que si l'ensemble de la cavité de surface avait été réalisée dans un unique matériau hydrophobe. En revanche les parois et les zones de contacts situées entre les rainures doivent de préférence rester hydrophobe ce qui permet d'améliorer l'effet de barrière capillaire lors du remplissage des cavités. Pour améliorer le remplissage complet d'une barrière liquide de protection autour de la zone d'analyse, il est préférable que la portion de surface hydrophile dans le canal d'échappement primaire entoure entièrement la zone d'analyse. Inversement, pour un liquide de type huile, il est plus avantageux de réaliser un canal d'échappement primaire présentant un fond hydrophobe et des parois et zones de contact hydrophiles.

Il est important de noter que pour une extension et un volume total donné de la zone d'échappement, plus le nombre de couloirs d'échappement est grand (de préférence, jusqu'à 5 rainures), mieux l'échantillon restera correctement positionné toutes choses égales par ailleurs.

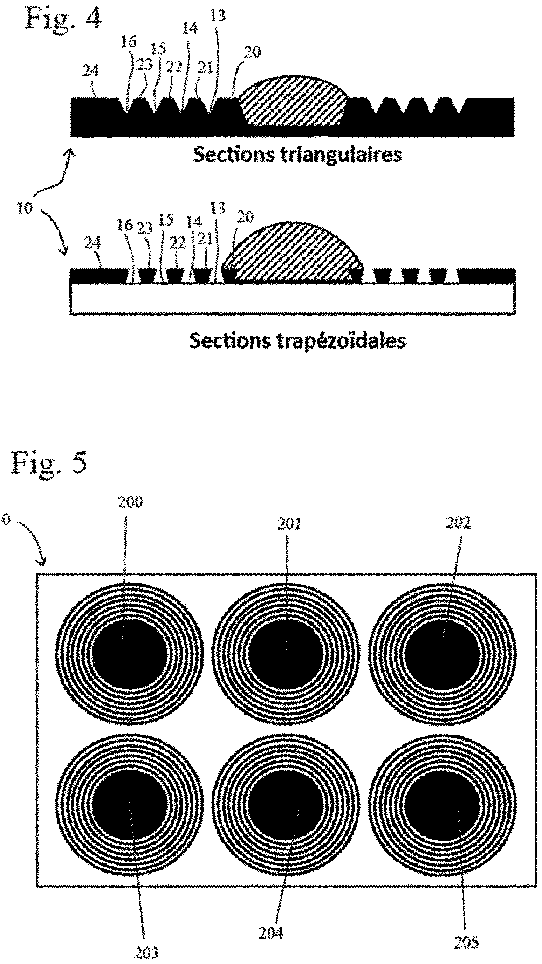

La figure 4 représente schématiquement un ensemble de rainures sous forme de micro canaux de sections triangulaires (fig. 4-haut) ou trapézoïdales (fig. 4-bas). En effet, la géométrie des diverses cavités et rainures de surface constituant le réseau micro structuré du support peut être avantageusement modifié pour les besoins de l'utilisateur. Plus l'espacement entre les couloirs d'échappement est régulier, plus le positionnement sera reproductible. L'utilisation d'un ensemble de micro canaux de section constante pour les couloirs d'échappements permet aussi d'obtenir un remplissage homogène de la zone d'échappement et limite les erreurs de remplissage liées à un mauvais positionnement du substrat de fermeture par l'utilisateur. L'utilisation de cavités de surfaces essentiellement constituées de portions de sections rectangulaires permet d'obtenir des effets d'angle au fond des cavités qui facilitent et accélère le remplissage des couloirs d'échappement tout en limitant l'apparition de bulles. Cependant et fonction de l'affinité de l'échantillon liquide pour le substrat, on pourra soit opter pour des sections de types triangulaires qui réduisent la probabilité de formation de bulles (liquides de faible affinité avec le substrat micro structuré) ou des sections trapézoïdales qui augmentent l'efficacité de la barrière capillaire entre les différentes cavités (liquides de forte affinité avec le substrat micro structuré).

La figure 4 illustre deux exemples schématiques de réseaux d'échappement constitués de micro canaux de sections triangulaires et trapézoïdales ainsi définies. Il est à noter dans ces exemples que l'épaisseur des cavités de surfaces n'est pas forcément homogène. Par exemple, la zone d'analyse peut présenter une épaisseur plus importante que les couloirs d'échappement lorsque l'on souhaite économiser l'échantillon liquide à analyser tout en bénéficiant d'un maximum de couloirs d'échappement pour un positionnement précis de l'échantillon. Inversement, l'approfondissement des couloirs d'échappement permettra de stocker plus de liquide excédentaire pour ralentir le processus d'évaporation.

Il est entendu que plusieurs réseaux de cavités de surfaces peuvent être juxtaposés sur un même substrat pour y dispenser un nombre plus important d'échantillons.

La figure 5 représente un exemple de substrat selon l'invention destinée à une analyse multi échantillons utilisant des cavités de surface de géométrie latérale circulaire. Pour chaque zone d'analyse 200, 201, 202, 203, 204, 205, un réseau d'échappement constitué d'une pluralité de rainures circulaires disposées concentriquement autour de chaque zone d'analyse, chaque réseau étant indépendant et disjoint des autres réseaux permet de limiter la contamination entre les échantillons.

Inversement, la zone d'analyse peut être organisée comme la juxtaposition connexe de plusieurs zones.

Enfin, il est à noter que le substrat de fermeture (lamelle 30) respectivement le substrat micro structuré, peuvent être constitués par tout système présentant une surface plane, respectivement une surface supérieure, y compris d'analyse (capteur CCD, etc.) ou de contrôle (puce micro fluidique de thermalisation ou de perfusion).

Le système décrit par l'invention peut être utilisé pour positionner un échantillon biologique sous forme de cavité fine avant une observation en microscopie optique. Un autre exemple d'application consiste à utiliser le système de l'invention pour un système de détection biologique par interaction avec des objets distribués à la surface du substrat (puce à ADN ou à protéines) dans lequel l'invention permet de fermer la chambre réactionnelle en assurant une réaction homogène dans l'ensemble de la zone d'analyse. Un troisième exemple d'application est l'analyse systématique d'un produit chimique à l'aide d'un système de dispense automatique couplé à une analyse en transmission à l'aide d'un système de spectroscopie de la cavité fine formée à l'aide de l'invention sans fuite de l'échantillon.

## Revendications

1. Ensemble d'analyse optique d'un échantillon liquide **caractérisé en ce qu'**il comporte un substrat (10) micro structuré de support d'échantillon liquide comprenant une face inférieure (11) et une face supérieure (17) qui comporte d'une part, au moins une cavité de surface (12) de volume V0 débouchant sur ladite face supérieure (17) et formant une zone d'analyse de l'échantillon liquide et d'autre part, une première rainure (13) d'un premier volume V1, disposée autour de chaque cavité de surface (12) et débouchant sur sa face supérieure (17), ainsi qu'au moins une seconde rainure (14,15,16) débouchant sur sa face supérieure (17) et disposée autour de la première rainure (13), la somme des volumes des secondes rainures étant égale à V2, le volume V1+V2 étant supérieur ou égal à 0,05 V0, de préférence 0,1 V0, la profondeur des rainures (13,14,15,16) étant supérieure à 10 microns et inférieure à 500 microns, de préférence comprise entre 20 microns et 500 microns, les rainures étant continues et/ou ne communiquant pas les unes avec les autres, substrat sur lequel est déposé dans au moins une cavité (12), au moins un échantillon liquide (1) de volume supérieur à la somme des volumes de la cavité (12) et de la première rainure (13), substrat (10) qui est recouvert par une lamelle (30) venant fermer l'ensemble des cavités (12) du substrat (10).

2. Ensemble selon la revendication 1, **caractérisé en ce que** le volume V1+V2 est supérieur ou égal à 0,2 V0, plus préférentiellement supérieur ou égal à 0,3 V0.

3. Ensemble selon l'une des revendications 1 ou 2, **caractérisé en ce qu'**il comporte au total n rainures (13,14,15,16), avec n>2, chaque rainure de rang p supérieur ou égal à 2 et inférieur ou égal à n étant disposée autour de la rainure de rang (p-1), le volume total V3 des (n-1) premières rainures (13,14,15) étant supérieur ou égal à 0,05 V0.

4. Ensemble selon l'une des revendications précédentes, **caractérisé en ce qu'**il comporte n rainures (13,14,15,16), n étant inférieur ou égal à 100, de préférence inférieur ou égal à 10.

5. Ensemble selon l'une des revendications précédentes, **caractérisé en ce que** la section de chacune des rainures (13,14,15,16) est sensiblement identique et/ou de préférence constante ou sensiblement constante.

6. Ensemble selon l'une des revendications précédentes, **caractérisé en ce qu'**il comporte n rainures circulaires concentriques (13,14,15,16) de même section, disposées de préférence à égale distance les unes des autres.

7. Ensemble selon l'une des revendications précédentes, **caractérisé en ce que** la profondeur des rainures est comprise entre environ 10 microns et 500 microns, de préférence entre 20 microns et 500 microns.

8. Ensemble selon l'une des revendications précédentes, **caractérisé en ce que** la distance entre le contour intérieur d'une rainure (14, 15, 16) et le contour extérieur de la rainure précédente (13, 14, 15) qu'elle entoure et/ou la cavité (12) est comprise entre environ 1 micron et 1 mm, de préférence égale à environ 100 microns.

9. Ensemble selon l'une des revendications précédentes, **caractérisé en ce que** au moins certaines zones de la face supérieure (17) et/ou de la cavité (12) et/ou des rainures sont traitées de manière à modifier dans ces zones les propriétés de la barrière capillaire inhérente à l'état de surface du matériau constituant le substrat et/ou à la géométrie des rainures et des surfaces.

10. Ensemble selon l'une des revendications précédentes, **caractérisé en ce que** le support (10) comporte une pluralité de cavités (12), chacune d'entre elles étant entourée par une pluralité de rainures (13, 14, 15, 16), par exemple un même nombre n de rainures.

11. Ensemble selon l'une des revendications précédentes, **caractérisé en ce qu'**il possède au moins six, de préférence au moins huit cavités de surfaces, chaque cavité ayant un diamètre d'environ 5 mm et une profondeur comprise entre 20 microns et 500 microns et étant distante d'environ 5 mm d'une autre cavité, chaque cavité étant entourée d'une série de 5 à 10 rainures d'environ 100 microns de profondeur, distantes les unes des autres d'environ 100 microns.

12. Ensemble selon l'une des revendications précédentes, **caractérisé en ce que** le substrat (10) est constitué par un matériau monocouche ou multicouches dans lequel sont gravés ou formés thermiquement, mécaniquement et/ou chimiquement l'une au moins des rainures (13, 14, 15, 16) et/ou la cavité (12).

13. Ensemble selon l'une des revendications précédentes, **caractérisé en ce que** le volume de la première rainure (13) est au moins trois fois, de préférence au moins cinq fois et plus préférentiellement au moins dix fois inférieur au volume V0 de la cavité (12).

14. Ensemble selon l'une des revendications précédentes, **caractérisé en ce que** les rainures du substrat (10) sont des micro-canaux de section triangulaires ou trapézoïdales.

15. Utilisation de l'ensemble selon l'une des revendications 1 à 14 pour la réalisation d'analyse optique d'un échantillon liquide.

16. Utilisation selon la revendication 15 pour la réalisation d'une analyse utilisant la technique d'amplification dite « PCR ».

## Patentansprüche

1. Optische Analyseanordnung für eine flüssige Probe, **dadurch gekennzeichnet, dass** sie ein mikrostrukturiertes Trägersubstrat (10) für eine flüssige Probe umfasst, welches eine Unterseite (11) und eine Oberseite (17) umfasst, wobei das Substrat einerseits mindestens einen Oberflächenhohlraum (12) mit einem Volumen V0, welcher an die Oberseite (17) mündet und eine Analysezone für die flüssige Probe bildet, und andererseits eine erste Rille (13) mit einem ersten Volumen V1, welche um jeden Oberflächenhohlraum (12) angeordnet ist und an seine Oberseite (17) mündet, sowie mindestens eine zweite Rille (14, 15, 16), die an seine Oberseite (17) mündet und um die erste Rille (13) herum angeordnet ist, wobei die Summe der Volumina der zweiten Rillen gleich V2 ist, wobei das Volumen V1+V2 grösser als oder gleich 0,05 V0 ist, vorzugsweise 0,1 V0, wobei die Tiefe der Rillen (13, 14, 15, 16) grösser als 10 Mikrometer und kleiner als 500 Mikrometer ist, vorzugsweise zwischen 20 Mikrometer und 500 Mikrometer, wobei die Rillen kontinuierlich und/oder nicht miteinander kommunizierend ausgebildet sind, wobei mindestens eine flüssige Probe (1), dessen Volumen grösser als die Summe der Volumina des Hohlraums (12) und der ersten Rille (13) ist, auf dem Substrat in mindestens einem Hohlraum (12) abgestellt ist, wobei das Substrat (10) von einer Lamelle (30) bedeckt ist, die alle Hohlräume (12) in dem Substrat (10) verschließt.

2. Anordnung nach Anspruch 1, **dadurch gekennzeichnet, dass** das Volumen V1+V2 grösser als oder gleich 0,2 V0 ist, bevorzugter grösser als oder gleich 0,3 V0.

3. Anordnung nach einem der Ansprüche 1 oder 2, **dadurch gekennzeichnet, dass** sie insgesamt n Nuten (13, 14, 15, 16) mit n>2 umfasst, wobei jede Rille der Reihe p, grösser als oder gleich 2 und kleiner als oder gleich n, um die Rille der Reihe (p-1) angeordnet ist, wobei das Gesamtvolumen V3 der (n-1) ersten Rillen (13, 14, 15) grösser als oder gleich 0,05 V0 ist.

4. Anordnung nach einem der vorhergehenden Ansprüche, **gekennzeichnet dadurch, dass** sie n Rillen (13, 14, 15, 16) umfasst, wobei n kleiner als oder gleich 100 ist, vorzugsweise kleiner oder gleich 10.

5. Anordnung nach einem der vorhergehenden Ansprüche, **dadurch gekennzeichnet, dass** der Querschnitt jeder Nute (13, 14, 15, 16) im wesentlichen identisch und/oder vorzugsweise konstant oder im wesentlichen konstant ist.

6. Anordnung nach einem der vorhergehenden Ansprüche, **gekennzeichnet dadurch, dass** sie n konzentrische kreisförmige Rillen (13, 14, 15, 16) mit demselben Querschnitt umfasst, die vorzugsweise in gleichem Abstand voneinander angeordnet sind.

7. Anordnung nach einem der vorhergehenden Ansprüche, **dadurch gekennzeichnet, dass** die Tiefe der Rillen zwischen etwa 10 Mikrometer und 500 Mikrometer liegt, vorzugsweise zwischen 20 Mikrometer und 500 Mikrometer.

8. Anordnung nach einem der vorhergehenden Ansprüche, **dadurch gekennzeichnet, dass** der Abstand zwischen der Innenkontur einer Rille (14, 15, 16) und der Außenkontur der vorhergehenden, diese Rille umgebenden Rille (13, 14, 15) und/oder dem Hohlraum (12) zwischen etwa 1 Mikron und 1 mm ist, vorzugsweise gleich etwa 100 Mikron.

9. Anordnung nach einem der vorhergehenden Ansprüche, **dadurch gekennzeichnet, dass** zumindest einige Bereiche der Oberseite (17) und/oder des Hohlraums (12) und/oder der Rillen so behandelt sind, dass sie in diesen Bereichen die Eigenschaften der Kapillarsperre verändern, die dem Oberflächenzustand des Materials des Substrats und/oder der Geometrie der Rillen und Oberflächen inhärent sind.

10. Anordnung nach einem der vorhergehenden Ansprüche, **dadurch gekennzeichnet, dass** der Träger (10) mehrere Hohlräume (12) umfasst, wobei jeder von ihnen von mehreren Rillen (13, 14, 15, 16), zum Beispiel von den gleichen Anzahlen n von Rillen, umgeben ist.

11. Anordnung nach einem der vorhergehenden Ansprüche, **gekennzeichnet dadurch, dass** sie mindestens sechs, vorzugsweise mindestens acht, Oberflächenhohlräume aufweist, wobei jeder Hohlraum einen Durchmesser von etwa 5 mm und eine Tiefe zwischen 20 Mikrometer und 500 Mikrometer aufweist, und um ungefähr 5 mm von einem anderen Hohlraum beabstandet ist, wobei jeder Hohlraum von einer Reihe von 5 bis 10 Rillen umgeben ist, die eine Tiefe von ungefähr 100 Mikrometern aufweisen und um ungefähr 100 Mikrometer voneinander beabstandet sind.

12. Anordnung nach einem der vorhergehenden Ansprüche, **dadurch gekennzeichnet, dass** das Substrat (10) ein Mono- oder Mehrschichtmaterial umfasst, in dem mindestens eine der Rillen (13, 14, 15, 16) und/oder der Hohlraum (12) durch Ätzen oder thermischen, mechanischen und/oder chemischen Prozess gebildet werden.

13. Anordnung nach einem der vorhergehenden Ansprüche, **dadurch gekennzeichnet, dass** das Volumen der ersten Nut (13) um mindestens dreimal, vorzugsweise mindestens fünfmal und bevorzugter mindestens zehnmal, kleiner als das Volumen V0 des Hohlraums (12) ist.

14. Anordnung nach einem der vorhergehenden Ansprüche, **gekennzeichnet dadurch, dass** die Rillen in dem Substrat (10) Mikrokanäle mit einem dreieckigen oder trapezförmigen Querschnitt sind.

15. Verwendung der Anordnung nach einem der Ansprüche 1 bis 14 zum Durchführen einer optischen Analyse für eine flüssige Probe.

16. Verwendung nach Anspruch 15 zum Durchführen einer Analyse unter Verwendung der sogenannten PCR-Amplifikationstechnik.

## Claims

1. An optical analysis assembly for a liquid sample, **characterized in that** it comprises a micro-structured support substrate (10) for a liquid sample comprising a lower face (11) and an upper face (17), wherein said substrate comprises on the one hand at least one surface cavity (12) with a volume V0 opening onto said upper face (17) and forming an analysis zone for the liquid sample and on the other hand a first groove (13) with a first volume V1 arranged around each surface cavity (12) and opening onto its upper face (17), as well as at least one second groove (14, 15, 16) opening onto its upper face (17) and arranged around of the first groove (13), wherein the sum of the volumes of the second grooves is equal to V2, wherein the volume V1+V2 is superior or equal to 0.05 V0, preferably 0.1 V0, wherein the depth of the grooves (13, 14, 15, 16) is superior to 10 microns and inferior to 500 microns, preferably between 20 microns and 500 microns, wherein the grooves are continuous and/or not communicating with each other, wherein at least one liquid sample (1) with a volume superior to the sum of the volumes of the cavity (12) and of the first groove (13) is deposited on said substrate in at least one cavity (12), wherein the substrate (10) is covered by a thin plate (30) closing all the cavities (12) of the substrate (10).

2. The assembly according to claim 1, **characterized in that** the volume V1+V2 is superior or equal to 0.2 V0, more preferably superior or equal to 0.3 V0.

3. The assembly according to any one of the claims 1 or 2, **characterized in that** it comprises a total of n grooves (13, 14, 15, 16), with n>2, wherein each groove of row p superior or equal to 2 and inferior or equal to n is arranged around the groove of row (p-1), wherein the total volume V3 of the (n-1) first grooves (13, 14, 15) is superior or equal to 0.05 V0.

4. The assembly according to any one of the preceding claims, **characterized in that** it comprises n grooves (13, 14, 15, 16), wherein n is inferior or equal to 100, preferably inferior or equal to 10.

5. The assembly according to any one of the preceding claims, **characterized in that** the section of each of the grooves (13, 14, 15, 16) is substantially identical and/or preferably constant or substantially constant.

6. The assembly according to any one of the preceding claims, **characterized in that** it comprises n concentric circular grooves (13, 14, 15, 16) with the same section, preferably arranged at an equal distance from each other.

7. The assembly according to any one of the preceding claims, **characterized in that** the depth of the grooves is between about 10 microns and 500 microns, preferably between 20 microns and 500 microns.

8. The assembly according to any one of the preceding claims, **characterized in that** the distance between the internal contour of a groove (14, 15, 16) and the external contour of the preceding groove (13, 14, 15) surrounded by said groove and/or the cavity (12) is comprised between about 1 micron and 1 mm, preferably equal to about 100 microns.

9. The assembly according to any one of the preceding claims, **characterized in that** at least some areas of the upper face (17) and/or of the cavity (12) and/or of the grooves are treated so as to modify in these areas the properties of the capillary barrier inherent to the surface state of the material of the substrate and/or the geometry of said grooves and surfaces.

10. The assembly according to any one of the preceding claims, **characterized in that** the support (10) comprises a plurality of cavities (12), wherein each of them is surrounded by a plurality of grooves (13, 14, 15, 16), for example the same number n of grooves.

11. The assembly according to any one of the preceding claims, **characterized in that** it has at least six, preferably at least eight surface cavities, wherein each cavity has a diameter of about 5 mm and a depth comprised between 20 microns and 500 microns and is spaced by about 5 mm from another cavity, wherein each cavity is surrounded by a series of 5 to 10 grooves having a depth of about 100 microns and being spaced from each other by about 100 microns.

12. The assembly according to any one of the preceding claims, **characterized in that** the substrate (10) comprises a monolayer or multilayer material, in which at least one of the grooves (13, 14, 15, 16) and/or the cavity (12) are formed by an etching or thermal, mechanical and/or chemical process.

13. The assembly according to any one of the preceding claims, **characterized in that** the volume of the first groove (13) is at least three times, preferably at least five times and more preferably at least ten times, inferior to the volume V0 of the cavity. (12).

14. The assembly according to any one of the preceding claims, **characterized in that** the grooves in the substrate (10) are micro-channels having a triangular or trapezoidal section.

15. A use of the assembly according to any one of claims 1 to 14 for performing an optical analysis for a liquid sample.

16. The use according to claim 15 for performing an analysis using the so-called 'PCR' amplification technique.
